# EUROPEAN PATENT APPLICATION

(11) **EP 1 906 638 A1**
(43) Date of publication of application: **02.04.2008**
(21) Application number: 06753077.4
(22) Date of filing: 30.06.2006
(51) Int. Cl.: H04M 3/42

(54) **A GEOGRAPHIC LOCATION INFORMATION INQUIRY METHOD AND SYSTEM IN PACKET DOMAIN**

(30) Priority: 30.06.2005 CN 200510080252
(71) Applicant: Huawei Technologies Co., Ltd., Longgang District Shenzhen Guangdong 518129 (CN)
(72) Inventor: SHI, Youzhu, Shenzhen, Guangdong 518129 (CN)
(74) Representative: Pfenning, Meinig & Partner GbR
(86) International application number: PCT/CN2006/001517
(87) International publication number: WO 2007/003123

(57) **Abstract**

A geographic location information inquiry method and system in packet domain, where the terminal accesses the packet domain core network which uses SIP as the call control signaling via fixed network, and it includes the following steps: A. the terminal initiates a communication request (S1); B. the network service node acquires the access information from the communication request, and sends the access information as the inquiry parameter for inquiring to the geographic location information database (S4); C. the geographic location information database performs the inquiry using the inquiry parameter (S5), and returns back the inquiry results. The present invention uses the P-Access-Network-Info head domain as the description form of the geographic access point for users of fixed access type, which can accurately check out various geographic location information of the user.

## Description

### Field of the Invention

The present invention relates to the communication field, and particularly to a method and system for querying about geographical location information in a packet domain.

### Background of the Invention

The geographical location information query service is a basic telecommunication service, and shall be supported by the present developing packet domain telecommunication network. A corresponding service including the demand of time element, such as the alarm service, the call reservation, the schedule reminder and a conference reservation, shall be triggered in accordance with the time as set by a user. Also a service including a space element, such as the emergency call service, may be involved. The emergency call service is described by way of an example, and other services are similar to the emergency call service.

In the application of the emergency service, a query about an Emergency Call Center (ECC) closest to the calling user who initiates an emergency call is a critical issue. This query is conducted typically in two approaches.

1) If the access location of the calling user terminal is fixed, the network service node handling the emergency service may route the emergency call directly to the closest emergency call center which is set in accordance with static configuration data, i.e. the query is conducted implicitly in accordance with statically configured office routing data.

2) If the access location of the calling user terminal is mobile, the same user may access different office network devices. Therefore, a centralized geographical location information database is necessary. The database provides a correspondence relationship between the user and the closest emergency call thereto. In this case, the networking service node handling the emergency service shall initiate a query to the database in order to obtain the routing address of the closest emergency call center.

The use of the Session Initiation Protocol as the call control signaling for a packet telecommunication core network is one of present technology advancement trends, just like the NGN standards defined by ITU-T and ESTI. Apparently, the second approach will be adopted for a query to the emergency call center due to the mobility of the user in a packet domain.

In the second approach, duo to the mobility of the user in the packet domain, the network service node upon initiation of a query to the geographical location information database shall make current geographical location information of the calling user carried as parameters in addition to the possible identifier of the calling user and the possible emergency service short number (e.g. 119).

Presently in the SIP protocol, geographical location information of an access network for the user may be described with the "P-Access-Network-Info" header, but such an applicable access network includes only "IEEE-802.11a" / "IEEE-802.11b" / "3GPP-GERAN" / "3GPP-UTRAN-FDD" / "3GPP-UTRAN-TDD" / "3GPP-CDMA2000". In other words, the applicable access network is a WLAN or 3G access network, but no relevant solution is provided for an access via a fixed network.

In the SIP protocol, there is an absence of the description of geographical location information of a user with an access via a fixed network. Consequently, it is difficult to query about the closest emergency call center for this kind of user.

Further, services such as the alarm service, the call reservation, the conference reservation and the schedule reminder each are triggered in accordance with the time as set by a user. However, the time zone where the user is located may be different from the time zone where the network service node handling these services due to the mobility of the user in the packet domain, and in this case, the network service node shall query about the time zone where the user is located in order to accurately trigger these services at the time as set by the user.

Since the time zone where the user is located is determined by the geographical location of the user, it is difficult to query about the time zone where this kind of user is located in the SIP protocol, due to an absence of the description of geographical location information of the user with an access via a fixed network, which case is similar to the case of the emergency call.

Therefore, there is a need of providing a method for querying about geographical location information of a user with a fixed access in a packet telecommunication core network with SIP as the call control signaling regardless of an emergency call or a service triggered in accordance with the time as set by a user.

### Summary of the Invention

The invention provides a method and system for querying about geographical location information in a packet domain, which can solve the problem in the prior art that in the case of an emergency call initiated by a terminal with an access via a fixed network, the call of a service triggered in accordance with a time as set by the user or a request for service data modification in accordance with a time as set by the user, the absence of the description of geographical location information of the terminal with a fixed access may result in the failure of querying accurately about the closest emergency call center to the terminal initiating the emergency call or the time zone where the terminal is located.

The method according to the invention includes:

A method for querying about geographical location information in a packet domain, where a terminal accesses a packet domain core network using SIP as the call control signaling via a fixed network, includes the processes of:

A. initiating a communication request by the terminal;

B. obtaining access information in accordance with the communication request and sending the access information as query parameters to a geographical location information database, by a network service node; and

C. querying with the query parameters and returning a query result by the geographical location information database.

The communication request is a call request; and in the process A, the communication request carries access type information.

The access type information is set in the "P-Access-Network-Info" header of the SIP message of a call request.

In the process A, the SIP message of the call request further carries a field of the access information; and in the process B, the network service node obtains the access information in accordance with the SIP message of the call request.

In the process A or B, the access type and/or access information is set by the terminal or the network service node.

The call request may be one of the messages: SIP INVITE, SIP SUBSCRIBE or SIP MESSAGE.

Before the process A, the method further includes: initiating a registration request by the terminal, wherein the access information is carried in an SIP message of a registration request; and storing the access information at the network side.

The communication request is a call request or a service data modification request; and in the process B, the network service node obtains the access information stored at the network side in accordance with the communication request.

The network side is a network database or the network service node.

The access information includes: Country Code and/or National Destination Code and/or Operator Access Network Number and/or IP address of the terminal and/or Equipment Number of a network access node and/or Equipment Number of a user media conversion node.

The system according to the invention includes:

A system for querying about geographical location information in a packet domain, including a terminal and a geographical location information database, wherein the terminal accesses a packet domain core network using SIP as the call control signaling via a network service node of a fixed network, further includes:

a communication request message sending element, adapted to initiate a communication request message;

an access information obtaining element, arranged at the network service node and adapted to obtain access information in accordance with the communication request message and to send the access information as query parameters to the geographical location information database; and

the geographical location information database, adapted to query with the query parameters and to return a query result.

The system further includes:

an access type information setting element, arranged at the terminal or the network access node and adapted to set access type information of the terminal in an SIP message of a communication request when the terminal initiates the communication request.

The system further includes:

an access information setting element, arranged at the terminal or the network service node and adapted to set the access information of the terminal in an SIP message of the communication request.

The system further includes:

an access information storage element, arranged at the network side and adapted to store the access information carried in an SIP message of a registration request sent from the terminal when the terminal initiates the registration request; and

an access information obtaining element, arranged at the terminal or the network service node and adapted to obtain the access information stored at the network side in accordance with the communication request message.

The system further includes:

the access information obtaining element, arranged at a network database or the network service node.

The query method and system of the invention makes a terminal have an access to the packet domain core network using the SIP as call control signaling via a fixed network, and further in the SIP protocol, uses the "P-Access-Network-Info" header to describe an access geographical point of a user of the fixed access type, thereby enabling an accurate query about the closest emergency call center to the terminal initiating an emergency call or a time zone where the terminal is located.

### Brief Description of the Drawings

Figure 1 is a schematic diagram of a flow according to the invention;

Figure 2 is a schematic diagram of a system for querying about geographical location information in a packet domain according to the invention;

Figure 3 is another schematic diagram of a system for querying about geographical location information in a packet domain according to the invention; and

Figure 4 is a further schematic diagram of a system for querying about geographical location information in a packet domain according to the invention.

### Detailed Description of the Invention

Embodiments of the invention are described as follows in conjunction with the drawings.

In the invention, the "P-Access-Network-Info" header is reused to describe the access geographical point of a user with an access via a fixed network, so that a fixed access terminal user with an access to a packet telecommunication core network using SIP as the call control signaling can use the access geographical point carried in the header to accurately query about geographical location information such as the closest emergency call center to the user and the time zone where the user is located. It shall be noted that newly added description of the header as discussed below in the present embodiment is merely for highlighting parameter information necessarily carried in the header, but it does not mean that this shall be the unique description.

In the present embodiment, a kind of access-type field "NGN-Fixed" is added in the "P-Access-Network-Info" header, indicating a fixed-user access.

In the present embodiment, a field of terminal access information is also added in the "P-Access-Network-Info" header. In the traditional PSTN, a number in an E.164 format allocated to a user actually determines the geographical access location of the user. Similarly in a packet telecommunication network, an IP address allocated to a user by an operator determines the geographical access location of the user. Therefore, a kind of access information "fixed-access-id" may be added in the "P-Access-Network-Info" header in the following composition format:

Country Code + National Destination Code + Operator Access Network Number + IP address.

Typically, the "Country Code" refers to the international toll code of the country or region where the use is, the "National Destination Code" refers to the national toll area code, and the "Operator Access Network Number" refers to the network number allocated to each of operators capable of providing the same service.

Further, a POTS terminal typically accesses and registers with a packet domain via a network access node after media conversion via a user media conversion node. In particular, the user media conversion node provides the function of mutual conversion between circuit voice and packet voice between the POTS terminal and the packet domain and supports the function of packet voice coding/decoding, and the network access node provides such functions as registration, authentication, and authorization for the POTS terminal accessing the packet domain. Since the locations of the user media conversion node and the network access node are relatively fixed, the operator can allocate equipment identification numbers to them. Therefore, the composition format of the "fixed-access-id" may be as follows:

Country Code + National Destination Code + Operator Access Network Number + Equipment Number of Network Access Node + Equipment Number of User Media Conversion node.

Here, the fields of the "Equipment Number of Network Access Node" and the "Equipment Number of User Media Conversion Node" may be set concurrently or alternatively without any influence on the solution of the invention.

Dependent on topologies and sizes of networks at different regions, not all the fields are required to be validly present in the composition format of access information. If the country where a user is located is such small that there is no toll code or only one operator, the "National Destination Code" and the "Operator Access Network Number" may be invalid fields.

The "P-Access-Network-Info" header with addition of the above parameter may be as follows:
- P-Access-Network-Info: = "P-Access-Network-Info" HCOLON
access-net-spec
- access-net-spec: = access-type *(SEMI access-info)
- access-type: = "IEEE-802.11 a" / "IEEE-802.11 b" /
"3GPP-GERAN" / "3GPP-UTRAN-FDD" /
"3GPP-UTRAN-TDD" /
"3GPP-CDMA2000" /
"NGN-Fixed" / token
- access-info: = cgi-3gpp / utran-cell-id-3gpp / fixed-access-id /
extension-access-info
- extension-access-info: = gen-value
- cgi-3gpp: = "cgi-3gpp" EQUAL
(token / quoted-string)
- utran-cell-id-3gpp: = "utran-cell-id-3gpp" EQUAL
(token / quoted-string)
- fixed-access-id: = "fixed-access-id" EQUAL
(token / quoted-string)

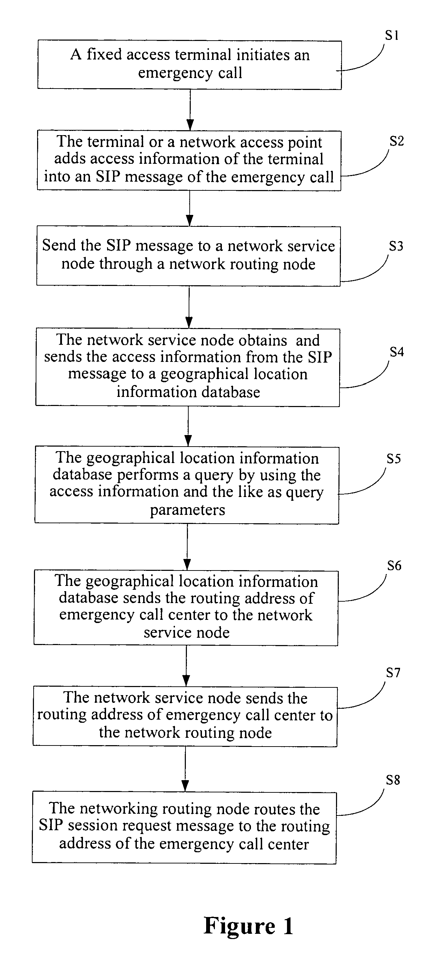

Figure 1 is a schematic diagram of a flow according to the invention. Figure 1 illustrates a flow of querying about the routing address of the closest emergency call center to a fixed access terminal user when the user initiates an emergency call.

S1: A fixed access terminal initiates an emergency call.

The terminal initiates an emergency call by dialing an emergency service short number.

S2: The terminal or the network access node adds the access type and access information of the fixed access terminal in the "P-Access-Network-Info" header of an SIP message (an INVITE message) of the emergency call.

If the terminal is provided with a SIP interface, the terminal accomplishes such a process. If the terminal is not provided with a SIP interface, the network access node having a SIP interface accomplishes the process.

The network access node is a network node which offers the fixed access terminal an access to a packet core network using SIP as the call control signaling, and provides the SIP interface upward.

S3: The SIP message (the INVITE message) is sent to a network service node via a network routing node.

The network routing node is a network node which provides the function of routing relay for SIP signaling in the packet core network. The network routing node sends the SIP INVITE message received from the network access node to the network service node handling the corresponding service. In Figure 1, the network service node handles the emergency call service, where the network service node determines the need of querying about geographical location information of the terminal in accordance with the service attribute of the call (e.g. the service attribute is determined as an emergency call in accordance with the analysis of a number such as 119).

S4: The network service node obtains and sends the access information from the SIP message (the INVITE message) to a geographical location information database.

The network service node firstly analyzes the attribute of the emergency call in accordance with the SIP INVITE message, and determines the need of querying about the geographical location information of the terminal.

The network service node obtains the access information from the "P-Access-Network-Info" header of the SIP INVITE message. The terminal user may alternatively make the access information to be carried in the "P-Access-Network-Info" header of the SIP message of a registration (a Register message) during the registration, so that a network database or the network service node stores the access information. Therefore in this case, the network service node can obtain the access information from the network database or its own data storage.

The network service node sends the access information, the emergency service short number, etc., as parameters of a query message to a proper geographical location information database.

S5: The geographical location information database performs a query using the access information, the emergency service short number, etc., as query parameters.

Since different emergency services (such as fire alarm and first aid) shall involve different emergency call centers, the emergency service short number shall be used as one of the query parameters.

S6: The geographical location information database sends the routing address of an emergency call center to the network service node.

Upon success of the query, the geographical location information database sends the routing address of an emergency call center corresponding to the emergency service short number to the network service node.

S7: The network service node sends the routing address of the emergency call center to the network routing node.

S8: The network routing node routes the SIP message of the call request to the routing address of the emergency call center.

As can be seen from the above, a flow of querying about the time zone where the user is located in accordance with the terminal geographical access point carried in the "P-Access-Network-Info" header is very similar to the flow of querying about the routing address of the closest emergency call center to the user in the emergency call in Figure 1, and therefore will not be described in detail here.

In the above embodiment, the call request may be a SIP INVITE message, a SIP SUBSCRIBE message or a SIP MESSAGE message.

There is possibly another case in the solution of the invention in which the access information is stored in the network database or the network service node when the terminal initiates a registration. When the terminal initiates a SIP call request subsequently, the network service node receives the SIP message of the call, determines the need of querying about geographical location information of the terminal, obtains the access information from the network database or the network service node, and sends the access information as parameters of a query message to the geographical location information database for the relevant query. Therefore, the access information can be obtained more flexibly to offer more convenience of the query.

Further, if the user can modify service data by himself (e.g. the user registers or modifies the alarm time for the alarm service) via a service self-help management client (e.g. a Web client), the network service node receives a request for service data modification, and determines the need of querying about geographical location information of the terminal in accordance with the service attribute of modification data. In this case, since the modification data received by the network service node includes no access information, the access information shall be obtained from the network database or the network service node and be sent as parameters of a query message to the geographical location information database for the relevant query.

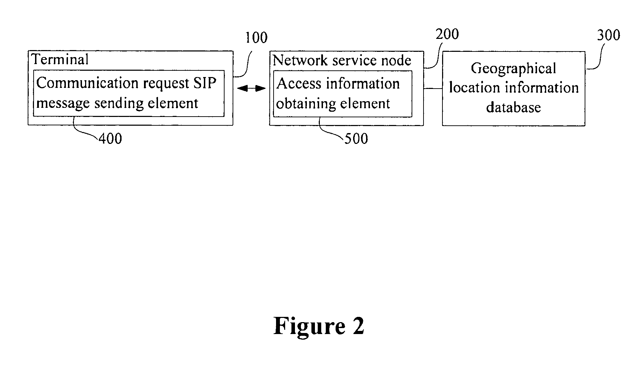

Figure 2 is a schematic diagram of a structure of a system for querying about geographical location information in a packet domain according to the invention. As can be seen from this Figure, the system mainly includes a terminal 100 and a geographical location information database 300, the terminal accesses a packet domain core network using SIP as the call control signaling via a network node 200 of a fixed network, and the system includes:

A communication request SIP message sending element 400, adapted to initiate a SIP message of a communication request;

An access information obtaining element 500, arranged at the network service node 200, and adapted to obtain access information in accordance with the SIP message of the communication request and to send the access information as query parameters to the geographical location information database 300;

A query is performed with the query parameters in the geographical location information database 300 and a query result is returned.

Preferably, the system may be further provided with:

An access type information setting element 600, adapted to set access type information of the terminal in the SIP message of the communication request when the terminal 100 sends the SIP message of the communication request (such as a SIP message of a call request or a SIP message of a registration request).

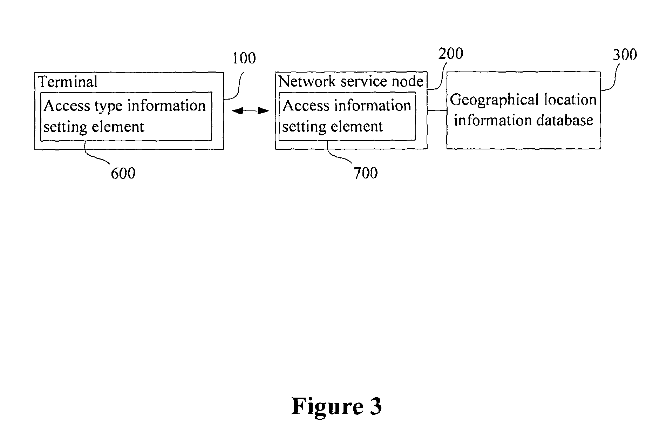

The access type information setting element 600 may be arranged at the terminal 100 or the network access node 200. Figure 3 illustrates a solution in which the access type information setting element 400 is arranged at the terminal 100.

Preferably, the system may be further provided with:

An access information setting element 700, arranged at the terminal 100 or the network access node 200 and adapted to set the access information of the terminal in the SIP message of the communication request.

Preferably, the system may be further provided with:

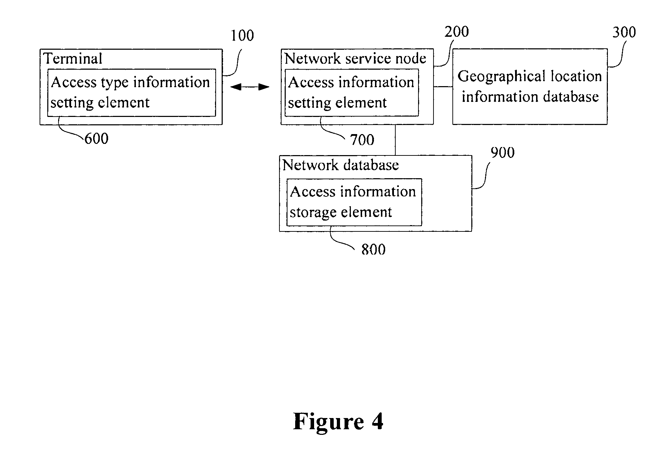

An access information storage element 800, arranged at a network database 900 or the network service node 200 and adapted to store the access information carried in the SIP message of a registration request sent from the terminal when the terminal initiates the service registration request. Figure 4 illustrates a solution in which the access information storage element is arranged at the network database 900.

In the above embodiments of the invention, the "P-Access-Network-Info" header in the SIP protocol is used to carry the fixed access type and access information. Apparently, the object of the invention can also be attained if other SIP headers are used to carry the fixed access type and access information.

Apparently, those skilled in the art can make various modifications and variations to the invention without departing from the spirit and scope of the invention. Accordingly, the invention is intended to encompass these modifications and variations of the invention provided that they fall within the scope of the appended claims and equivalents of the claims.

## Claims

1. A method for querying about geographical location information in a packet domain, where a terminal accesses a packet domain core network using SIP as the call control signaling via a fixed network, the method comprising the processes of:
A. initiating a communication request by the terminal;
B. obtaining access information in accordance with the communication request and sending the access information as query parameters to a geographical location information database, by a network service node; and
C. querying with the query parameters and returning a query result by the geographical location information database.

2. The method according to claim 1, **characterized in that** the communication request is a call request; and in the process A, the communication request carries access type information.

3. The method according to claim 2, **characterized in that** the access type information is set in the "P-Access-Network-Info" header of the SIP message of the call request.

4. The method according to claim 2 or 3, **characterized in that** in the process A, the SIP message of the call request further carries a field of access information; and in the process B, the network service node obtains the access information from the SIP message of the call request.

5. The method according to claim 4, **characterized in that** in the process A or B, the access type and/or access information is set by the terminal or the network service node.

6. The method according to claim 2 or 3, **characterized in that** the call request is: a SIP INVITE message, a SIP SUBSCRIBE message or a SIP MESSAGE message.

7. The method according to claim 1, **characterized in that** before the process A, the method further comprises:
initiating a registration request by the terminal, wherein the access information is carried in an SIP message of a registration request; and
storing the access information at the network side.

8. The method according to claim 7, **characterized in that** the communication request is a call request or a service data modification request; and in the process B, the network service node obtains the access information stored at the network side in accordance with the communication request.

9. The method according to claim 7, **characterized in that** the network side is a network database or the network service node.

10. The method according to claim 1, **characterized in that** the access information comprises: Country Code and/or National Destination Code and/or Operator Access Network Number and/or IP address of the terminal and/or Equipment Number of a network access node and/or Equipment Number of a user media conversion node.

11. A system for querying about geographical location information in a packet domain, comprising a terminal and a geographical location information database, wherein the terminal accesses a packet domain core network using SIP as the call control signaling via a network service node of a fixed network, the system further comprising:
a communication request message sending element, adapted to initiate a communication request message;
an access information obtaining element, arranged at the network service node and adapted to obtain access information in accordance with the communication request message and to send the access information as query parameters to the geographical location information database; and
the geographical location information database, adapted to query with the query parameters and to return a query result.

12. The system according to claim 11, **characterized in that** the system further comprises:
an access type information setting element, arranged at the terminal or the network access node and adapted to set access type information of the terminal in an SIP message of a communication request when the terminal initiates the communication request.

13. The system according to claim 11, **characterized in that** the system further comprises:
an access information setting element, arranged at the terminal or the network service node and adapted to set the access information of the terminal in an SIP message of the communication request.

14. The system according to claim 11, **characterized in that** the system further comprises:
an access information storage element, arranged at the network side and adapted to store the access information carried in an SIP message of a registration request sent from the terminal when the terminal initiates the registration request; and
an access information obtaining element, arranged at the terminal or the network service node and adapted to obtain the access information stored at the network side in accordance with the communication request message.

15. The system according to claim 14, further comprising:
the access information obtaining element, arranged at a network database or the network service node.
